# EUROPEAN PATENT APPLICATION

(11) **EP 4 374 947 A1**
(43) Date of publication of application: **29.05.2024**
(21) Application number: 23207748.7
(22) Date of filing: 03.11.2023
(51) Int. Cl.: B01D 29/33, B01D 29/68, B01D 35/16

(54) **FILTER DEVICE FOR PLUMBING SYSTEMS**

(30) Priority: 23.11.2022 IT 202200024060
(71) Applicant: HCE S.r.l., 25060 Cellatica (BS) (IT)
(72) Inventor: INGLESE, Enrico, 25060 Cellatica (IT)
(74) Representative: De Sandre, Emanuele

(57) **Abstract**

A filtering device comprises a connection body equipped with connection connectors and a discharge connector and a container body which can be coupled to the connection body so as to define an internal compartment;
- a filter cartridge for engagement with said connection body and/or said container body so as to be housed in said filtering compartment.

The filter cartridge comprises:
- a mechanical filter which delimits a first section from a second section of the filtering compartment and which can be crossed by a liquid so as to filter it;
- a cleaning group which comprises a turbine member which delimits a discharge section from the first section or from the second section of the internal compartment and which is configured to impart a rotational moment to the cleaning group following passage of a liquid through it.

The cleaning group comprises at least one cleaning member which is in the first section or in the section, if the turbine member delimits the discharge section from the first section or from the second section, respectively.

The cleaning member defines a discharge channel which places in hydraulic communication the first section or the second section with the discharge section.

One of the cleaning member and the mechanical filter is integrally connected to the turbine member or the other one of the cleaning member and the mechanical filter is rotatable so that, following the passage of fluid through the turbine member, the cleaning member rotates around the mechanical filter or vice versa.

When the discharge connector is opened to allow discharging of a fluid from the internal compartment, therefore, the cleaning member rotates around the mechanical filter which is crossed by a counter-current so as to remove therefrom the filtered residues and discharge them through the discharge connector.

## Description

### PRIOR ART

The present invention relates to a filtering device in particular suitable for being installed in a plumbing system and a filter cartridge which can be incorporated in said device.

The present filtering device, which is provided with such a filter cartridge, is especially suitable for being installed in a domestic or industrial heating system or in a sanitary system for filtering the circulating liquid.

In the specific technical sector it is known to perform the installation of at least one filtering device in heating systems.

A filtering device known nowadays for example comprises a body which delimits an internal compartment and which is provided with connectors which define respectively a first opening and a second opening which communicate hydraulically with the internal compartment.

From a hydraulic point of view, a mechanical filter is provided between the inlet opening and the second opening, i.e. a filter able to prevent or oppose the passage through it of particles which have a particle size greater than a predefined limit value.

Typically the mechanical filter consists of a tubular cylinder with a metal mesh. In some versions, an elongated magnetic element may be arranged coaxially with the mesh filter.

If provided, the magnetic element is functionally designed to retain magnetically reactive impurities which are transported by the liquid flow which passes over it.

This filtering device is configured so that the liquid entering into the compartment through the first opening proceeds radially through the mesh filter and then is discharged through the second opening, or vice versa.

A traditional filter, as described above, is relatively effective, but there exists an urgent need to improve its efficiency.

In fact, a mesh filter, or filter with an equivalent structure, is prone to blockages, since the solid or sludge-like particles to be filtered obstruct the meshes, pores or holes, gradually reducing the free cross-section of the filter and consequently its filtering capacity in terms of the liquid flow which can be filtered.

Nowadays the solution employed in order to solve the problem of blockage of the mechanical filter is that of subjecting the filtering device to programmed maintenance which involves disassembly of the mechanical filter, cleaning thereof, elimination of residues which may have accumulated in the internal compartment and on the filter itself, and reassembly thereof.

Particularly effective known solutions envisage that the filter is contained inside a transparent portion of the filtering device so that a blocked condition may be detected in good time and maintenance of the filter carried out to prevent inefficient functioning of the hydraulic system comprising it.

This solution, while being favourably viewed, nevertheless also requires extraction of the mechanical filter from the filtering device and therefore the at least partial disassembly thereof with the consequent need for the intervention of a skilled operator in order to prevent damage to the filtering device, the mechanical filter and the correct reassembly thereof and reinstallation thereof in the system after the maintenance operation.

### SUMMARY OF THE INVENTION

The problem underlying the present invention is therefore that of facilitating the maintenance of the filtering devices known hitherto and increasing their working autonomy, namely by limiting over time the need for disassembly of the filter so to ensure the full functionality thereof, while maintaining a high filtering capacity thereof.

The task of the present invention is therefore that of solving this problem.

In connection with this task, an object of the invention is to allow easier and more rapid cleaning of the filter so as to limit the maintenance thereof. Another object of the present invention is to propose a filtering device which allows more immediate detection of a blocked condition requiring a maintenance operation compared to traditional filtering devices.

Yet another object of the invention is to provide a filtering device which is able to improve in particular the removal of impurities from the mechanical filter. This object, along with other objects, which will emerge more clearly below, are achieved by a filter cartridge and by a filtering device including it, which are realized in accordance with the attached independent claim. Advantageous details of a filtering device according to the present invention are indicated in the attached dependent claims.

Further characteristic features and advantages of the invention will emerge more clearly from the detailed description which follows of at least one embodiment thereof described merely by way of a non-limiting example, with the aid of the attached sets of drawings in which:

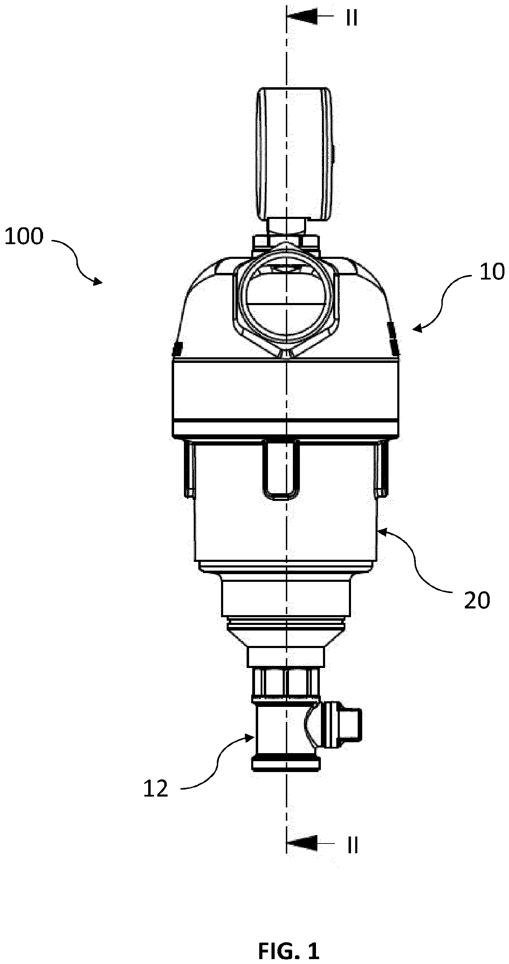

- Figure 1 shows a side view of a filtering device according to the present invention;
- Figure 2 shows the filtering device of Figure 1 cross-sectioned along the cross-sectional plane II-II of Figure 1;
- Figure 3 shows the filtering device of Figure 1 cross-sectioned along the plane III-III of Figure 2;
- Figure 4 shows an exploded perspective view of a filter cartridge according to the present invention;
- Figure 5 shows a variant of the filter shown in Figure 1 cross-sectioned along a cross-sectional plane parallel to the plane of the sheet;
- Figure 6 shows the filtering device of Figure 2 cross-sectioned along the plane VI-VI of Figure 5;
- Figure 7 shows a partially exploded perspective view of a variant of the filter cartridge shown in Figure 4, according to the present invention;
- Figure 8 shows a front view of a part of the filter cartridge according to Figure 7;
- Figure 9 shows a cross-sectional view of the filter cartridge along the plane IX-IX of Figure 8.

### DETAILED DESCRIPTION

With reference to the said figures, 100 denotes overall a filtering device which comprises:
- a connection body 10 equipped with connection connectors 11a, 11b and a discharge connector 12, each of which defines an internal passage 111a, 111b;
- a container body 20 which can be coupled to the connection body 10 so as to define, following their coupling together, a filtering compartment 120.

The filtering compartment is in fluid communication with each of the internal passages 111a, 111b.

In particular, for example, the container body 20 may have a transparent portion or consist of a body made of transparent material so as to allow viewing of the filtering compartment 120 from the outside, during operation of the filtering device 100.

The latter also comprises a filter cartridge 30 which is configured to be coupled to the connection body 10 and/or to the container body 20 so as to be housed inside the filtering compartment 120 when the filtering device 100 is in an assembled configuration in which the connection body 10, the container body 20 and the filter cartridge 30 are coupled together.

Namely, in the assembled configuration, the connection body 10 and the container body 20 are coupled together and furthermore, the filter cartridge 30 is engaged with the connection body 10 and/or the container body 20.

As will be specified more clearly below, the filter cartridge 30 may consist of a single article, namely an object which can be handled separately from the container body 20 and the connection body 10 in order to facilitate the production and maintenance of the filter device.

Furthermore, the filter cartridge 30 may have one or more fixed portions which are designed to be fixed to the connection body 10 and/or to the container body 20 and one or more movable portions which are mechanically connected to the connection body 10 and/or to the container body 20 not directly, but by means of the fixed portions which may support the movable portions for example rotatably about an axis of rotation X.

In particular the filter cartridge 30 comprises:
- a mechanical filter 31 which delimits a first section 121a of the filtering compartment 120 from a second section 121b of the filtering compartment 120 and which can be crossed by a liquid so as to filter it;
- a turbine member 33 which delimits a discharge section 121c of the filtering compartment 120 from the first section 121a or from the second section 121b of the filtering compartment 120;
- a cleaning member 34 able to carry out a hydraulic cleaning action on said mechanical filter.

The turbine member 33 is mechanically connected to the mechanical filter and/or to the cleaning member 34 so as to impart to them a relative rotational movement following passage of a liquid through the turbine member 33.

In other words, the filtering compartment 121 is divided into the first section 121a and into the second section 121b by the mechanical filter 31, the first section 121a and the second section 121b remaining in hydraulic communication with each other via the mechanical filter 31 such that the latter may filter a liquid passing from one to the other.

Furthermore, the turbine member 33 delimits, i.e. defines, a discharge section 121c which is able to discharge a liquid from the first section 121a or from the second section 121b of the filtering compartment 120, following opening of the discharge connector 12.

The filtering device 100, and in detail the filter cartridge 30, in general are configured so that, if the discharge connector 12 is closed, a fluid which passes, during use, through the filtering device 100, is made to pass between the first section 121a and the second section 121b exclusively, or at least almost exclusively, by crossing the mechanical filter 31, without passing through the discharge section 121c.

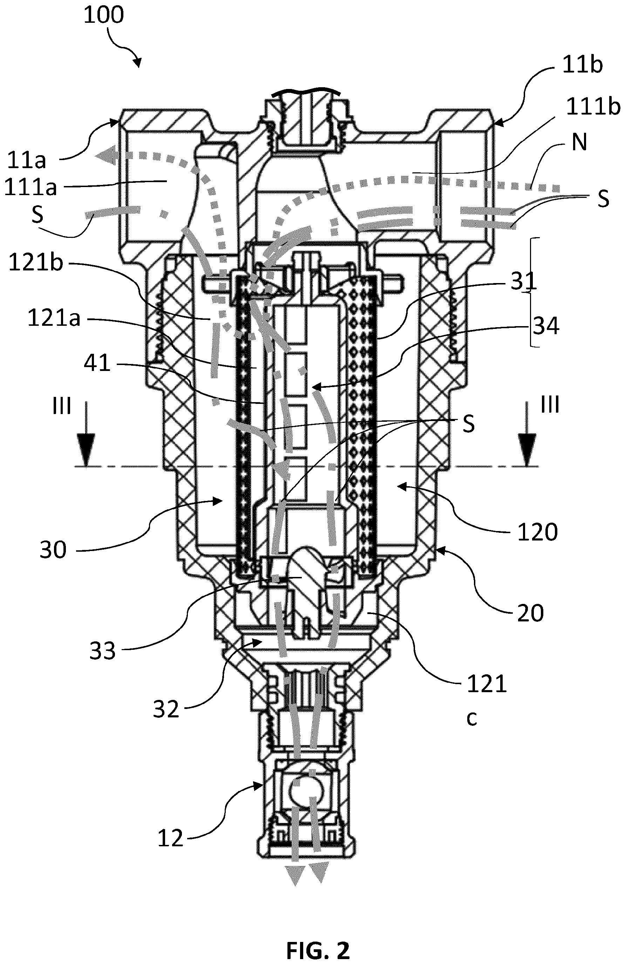

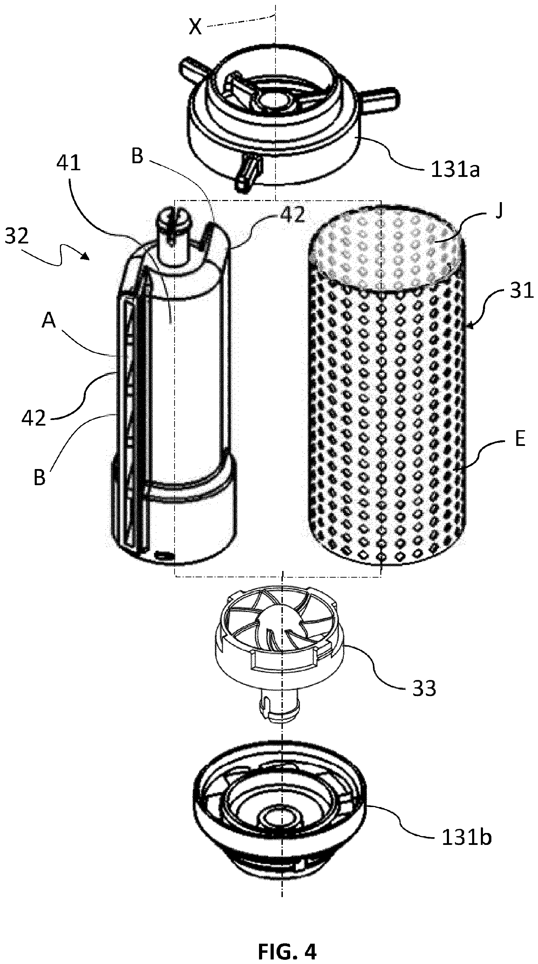

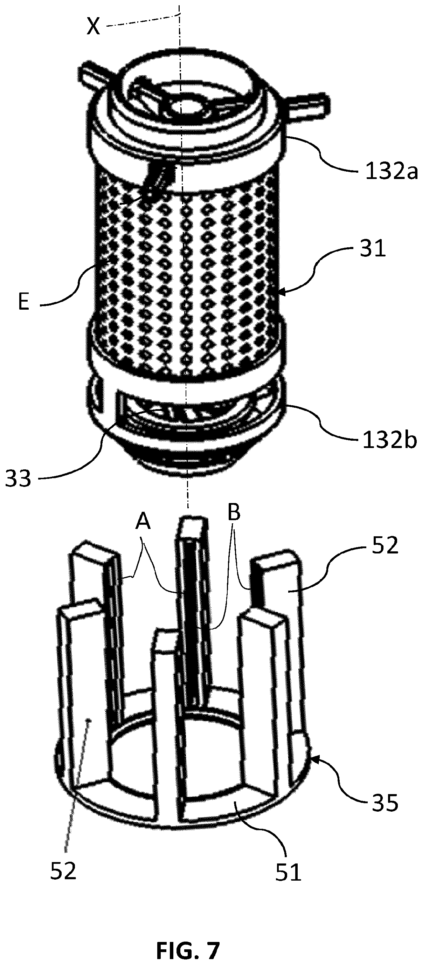

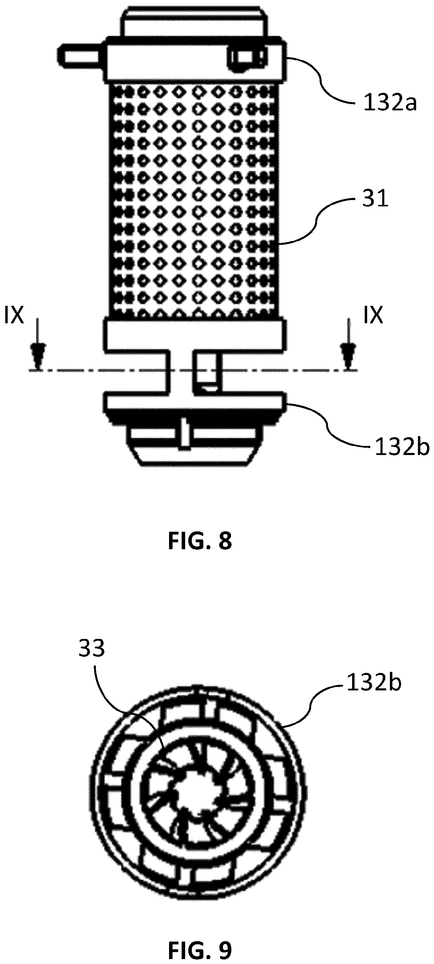

In the examples of embodiment according to the present invention shown in the two variants of Figures 2-4 and 5-8, it has been assumed that the filtering device 100 is integrated in a plumbing system from which it receives fluid through the second internal passage 111b of the second connector 11b and into which it re-introduces filtered fluid via the first internal passage 111a of the second connector 11a.

It should be noted that, in the present text, the references made to corresponding structural or functional characteristics are identified by the same reference symbols in both the aforementioned constructional variants, in order to facilitate understanding of the invention described here.

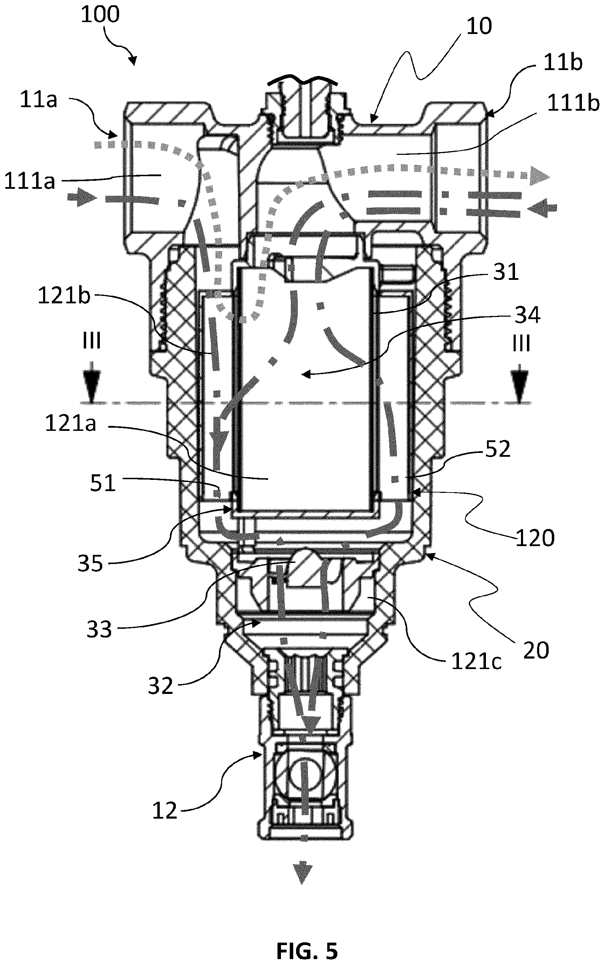

The turbine member 33, according to the present invention, in general delimits the discharge section 121c from the first section 121a, as for example in the variant of Figures 2-4, or delimits the discharge section 121c from the second section 121b, for example as in the variant of Figures 5-8 and, in any case, depending on the specific embodiment of the present invention in view of its particular application.

In this case also, the expression "delimits" is understood as meaning that the turbine member 33 defines a part of the filtering compartment 120, which is the discharge section 121c which, in this sense, can be identified separately from the first section 121a or from the second section 121b, respectively, while keeping the discharge section 121c in any case in hydraulic communication with the first section 121a or with the second section 121b respectively.

It should be noted that, according to the present invention, the discharge section 121c is selectively in communication directly or indirectly with the first section 121a or with the second section 121b, without being directly or indirectly in communication simultaneously with both the first section 121a or the second section 121b.

In other words, the filtering device 100 is configured so that there cannot be hydraulic communication between the first section 121a and the second section 121b which occurs via the discharge section 121c.

The cleaning member 34 and the mechanical filter 31 are connected to the turbine member 33 alternately or simultaneously, but, in any case, in such a way that a rotation of the turbine member 33 produces a relative movement of the cleaning member 34 and the mechanical filter 31.

In other words, the turbine member 33 may be connected to the cleaning member 34, as for example in the version of Figures 2-4, or to the mechanical filter 31, as for example in the version of Figures 5-8, or to both of them, so that there is a relative movement of the cleaning member 34 and the mechanical filter 31 following rotation of the turbine member 33.

It can therefore be understood how the mechanical filter 31, the turbine member 33 and/or the cleaning member 34 in general are connected to the connection body 10 and/or to the connection body 20 in a fixed or rotatable manner so as to allow relative rotation of the mechanical filter 31 and the cleaning member 34.

In general, however, the turbine member 33 is rotatably coupled to the connection body 10 and/or to the connection body 20, so as to be able to rotate with respect to the latter after being passed through by a fluid.

In particular, the turbine member 33 is configured to impart a rotational moment to the mechanical filter 31 or to the cleaning group 32, depending on the particular embodiment of the present invention, following crossing of the turbine member 33 by a liquid.

In other words, the filtering device 100 is configured so that the passage of a liquid through the turbine member 33 causes it to rotate and this rotation is transmitted from the turbine member 33 to the mechanical filter 31 and/or to the cleaning group 32 so as to cause relative rotation of the latter (namely of one with respect to other or of both of them simultaneously) which is able to ensure preferably at the same time the following:
- a counter-current flow through the mechanical filter 31, namely a fluid flow which crosses the filtering device 100 in a direction at least partially opposite to that of the fluid flow during normal operation of the filtering device 100 and intended to intercept the impurities conveyed by the fluid being filtered, so as to remove these impurities from the said mechanical filter;
- a relative movement of the mechanical filter 31 and the cleaning group 30 which causes separation of the impurities from the mechanical filter 31 so as to assist the cleaning thereof performed by the aforementioned counter-current flow of the fluid.

Structurally speaking, the turbine member 33 may be integrally connected to the cleaning group 32 and both of them are rotatably supported with respect to the container body 20 and the connection body 10, for example as in the variant of Figures 2-4.

Alternatively, the turbine member 33 may be integrally connected to the mechanical filter 31 and both of them are rotatably supported with respect to the container body 20 and the connection body 10, for example as in the variant of Figures 5-8.

However, further variants implemented depending on the particular embodiment requirements of the present invention are included within the scope of protection of the attached claims.

According to the present invention, the cleaning member 34 may be housed in the first section 121a if the turbine member 33 delimits the discharge section 121c from the first section 121a. An example of this embodiment of the present invention is shown by way of example in Figures 2-4.

Alternatively, the cleaning member 34 may be housed in the second section 121b if the turbine member delimits the discharge section 121c from the second section 121b. An example of this embodiment of the present invention is shown by way of example in Figures 5 to 8.

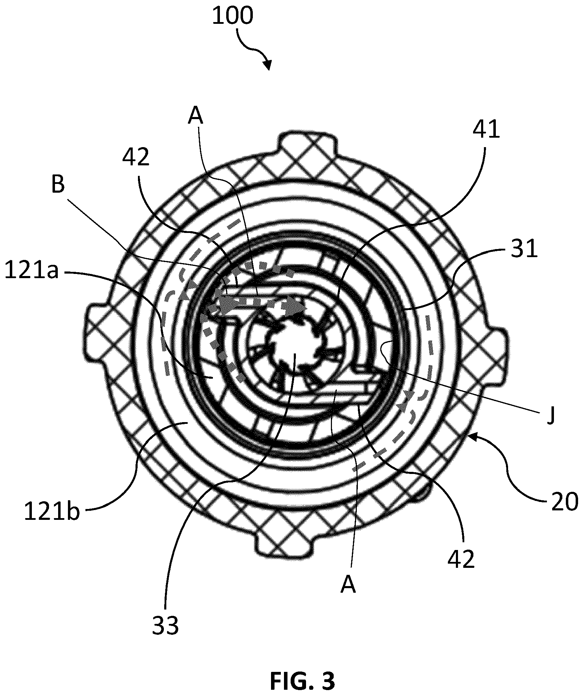

Moreover, in general, the cleaning member 34 defines a discharge channel A which places the first section 121a in direct hydraulic communication with the discharge section 121c if the cleaning member 34 is housed in the first section 121a, as in the example of Figure 3.

In this case, for example in a situation where maintenance is carried out on the filtering device 100, following opening of the discharge connector 12, a fluid flow from the first section 121a and directed towards the discharge section 121c, which in Figure 3 is indicated by way of example by means of thick broken line arrows, infiltrates between the mechanical filter 31 and the opening B of the discharge channel A, passing over the inner wall J of the mechanical filter, thus performing hydrodynamic suction of the particles which were captured by the filter during normal operation of the filtering device 100 where the fluid crosses the mechanical filter 31 passing from the first section 121a to the second section 121c, for example as schematically indicated by the broken line N in Figure 2.

In the same figure, the dot-dash line S schematically indicates the liquid flow from the connectors 11a and 11b when the discharge connector 12 is open. Opening of the discharge connector 12 may be performed typically in order to clean the mechanical filter 31.

When said discharge connector 12 is opened, the fluid contained in the filtering device 100 tends to flow out of the latter through the discharge channel 121c, passing through the cleaning member 31 and causing rotation thereof.

In detail, the turbine member 33 is crossed by the fluid flows from both the first section 121a, directly through the discharge channels A, and from the second section 121b first through the mechanical filter 31, as a counter-current flow, and then indirectly, through the discharge channels A.

Therefore, the second section 121b is in hydraulic communication with the discharge channel A indirectly via the mechanical filter 31 such that, following opening of the discharge connector 12, a fluid flow coming from the second section 121b and directed towards the discharge section 121c crosses the mechanical filter 31, as a counter-current in the opposite direction to that in which it passes when the filtering device 100 is in operation with the discharge connector 12 closed.

The consequence of opening of the discharge connector 12 is that it produces on the particles retained by the inner wall J of the mechanical filter, namely that facing the first section 121a, simultaneously:
- a hydrodynamic suction action realized by the flow from the first section 121a and directed into the discharge channel A; and
- a counter-current washing action realized by the flow coming, via the mechanical filter 31, from the second section 121b.

The relative rotation of each discharge channel A with respect to the mechanical filter 31 as well as the fact that entire inner wall J of the mechanical filter 31 cyclically faces the discharge channel A results in particularly efficient cleaning of the mechanical filter.

In the embodiment shown in Figures 2-4 the filtering device 100 is configured so that the turbine member 33 is supported rotatably by the container body 20 and is integrally connected to the cleaning member 34 so as to cause it to rotate with respect to the mechanical filter 31.

Clearly, in other embodiments of the present invention, all falling within the scope of protection of the attached claims, the turbine member 33 may be connected, instead, to the mechanical filter 31 which is rotatably supported by the container body 20 and/or by the connection body 10, so as to cause it to rotate with respect to the cleaning member 34, as will be described below with reference by way of example to Figures 5-8.

Or else, in alternative embodiments of the present invention, not shown in the attached figures, the turbine member 33 may be connected simultaneously to the cleaning member 34 and to the mechanical filter 31 so as to operate both of them relative to each other.

In the filtering device 100 shown by way of example in Figures 2-4, a cleaning member provided with two discharge channels A is shown, although the number of channels may be chosen depending on the particular embodiment requirements of the present invention.

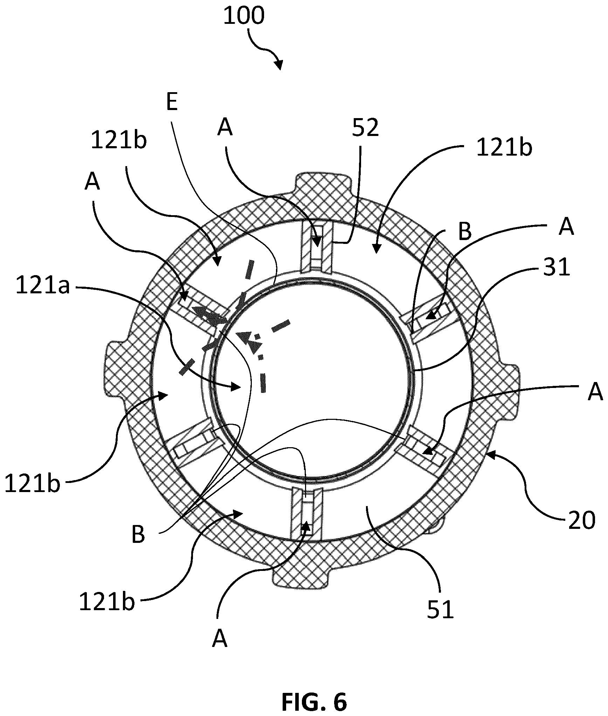

Differently, for example as can be seen in Figure 6, the discharge channels A may place in communication the second section 121b with the discharge section 121c and the cleaning member 34 may be correspondingly housed in the second section 121b.

In other words, the filtering device 100 may be configured so that the discharge channel A provides a hydraulic connection at least mainly, and preferably exclusively, between the first section 121a or the second section 121b and the discharge section 121c. In other words, the filtering device 100 is configured so that a fluid may pass from the first section 121a or from the second section 121b to the discharge section 121c by passing only through the discharge channel A or at least mainly through it so as to the perform cleaning of the mechanical filter 31 described by way of a non-limiting example in connection with the variant of Figures 2-4.

Furthermore, in an entirely general manner, one of the cleaning member 34 and the mechanical filter 31 is integral with the turbine member 33 and the other one of them is rotatably coupled to the container body 10 and/or to the connection body 20 so that, following the passage of fluid through the turbine member 33, relative rotation of the cleaning member 34 and the mechanical filter 31 is performed.

In particular, the discharge connector 12 can be opened so as to allow a fluid to flow out from the filtering compartment 120 and the filtering device 100 is configured so that a fluid flow coming out of the discharge connector 12 causes a fluid flow through the turbine member 33 and a rotation of the cleaning member 34 around the mechanical filter 31, or vice versa, as well as a counter-current fluid flow through the mechanical filter 31, directed towards the discharge channel A so as to remove from the mechanical filter 31 residues filtered by it and discharge them from the filtering device 100 through the discharge connector 12. In other words, opening of the discharge connector 12 results in the passage of a fluid flow through the turbine member 33, and therefore a rotation of the cleaning member 34 or the mechanical filter 31, or both of them, which favours discharging of the residues filtered by the mechanical filter 31 from the filtering device 100 through the discharge connector 12.

According to an embodiment of the present invention, the cleaning member 34 extends so as to skim over a surface of the mechanical filter 31 so that a relative movement of the cleaning member 34 and the mechanical filter 31 is able to generate a hydrodynamic action which removes sediments filtered by said mechanical filter 31 following opening of the discharge connector and consequent activation of rotation of the turbine member 33.

The cleaning member 34 may have at least one opening B, facing the mechanical filter 31, which communicates hydraulically with the at least one discharge channel A, so as to exert a suction action on any residues filtered by the mechanical filter 31 and lying on the inner wall J of the latter following the discharging of liquid through an opening B of the discharge connector 12, as described more fully above.

In other words, the residues may accumulate on a wall of the mechanical filter 31, during normal operation of the filtering device 100, and may be collected by the cleaning member 34 by means of the opening B facing this surface of the mechanical filter 31, preferably by means of a suction action for example due to the passage of a fluid towards the open discharge connector 12 and the consequent rotation of the cleaning group 32 or the mechanical filter 31.

For constructional simplicity, the mechanical filter 31 may have a cylindrical form and have a central axis which coincides with an axis of rotation X of the turbine member 33. Furthermore, the opening B of the at least one cleaning member 34 may extend parallel to the central axis of the mechanical filter 31 so as to skim over the mechanical filter 31 parallel to a geometrical generatrix thereof, namely parallel to the inner wall J thereof.

Preferably, the cleaning member 34 comprises a plurality of nozzle elements 42 which are arranged at a regular angular interval around the axis of rotation X of the turbine member 33 and each of which defines, inside it, a discharge channel A.

According to the embodiment of the present invention, shown in Figures 2, 3 and 4, the filtering device may comprise:
- an upper connector 131a, able to connect the mechanical filter 31 to the hydraulically sealed connection body 10;
- a lower connector 131b, able to connect the mechanical filter 31 to the hydraulically sealed container body 20.

In particular, preferably the turbine member 33 may be rotatably connected to the lower connector 131b and to the cleaning member 34 which may in turn be rotatably supported by the upper connector 131a. "Rotatably connected" is understood as meaning that, for example, the turbine member 33 is connected to the lower connector 131b so as to avoid a displacement inside the device while it is free to rotate about an axis of rotation X.

The lower connector 131b and the upper connector 131a may define said axis of rotation X, indicated by the reference letter X, and may consist of components separate from the container body 20 and the connection body 10 or may be integral therewith.

In the first case the upper connector and lower connector 131a and 131b, together with the cleaning member 32 and the mechanical filter 31 coupled to it, may form a single article which can be handled and may be assembled together with or disassembled from the container body 20 and from the connection body 10 by means of the upper and lower connectors 131a and 131b.

Alternatively, the turbine member 33 is rotatably connected to the cleaning member 34 which may in turn be integrally connected to the container body 10 and/or to the connection body 20. The turbine member 33, in this embodiment, may be integral with the lower connector 132b and the mechanical filter 31, which may be rotatably connected to the upper connector 132a, as for example in the variant of Figures 5-8 (where the upper connector and lower connector are indicated by the reference numbers 132a, 132b in a similar manner to the upper and lower connectors 131a and 131b of the version visible in Figures 2-4).

Preferably, moreover, the cleaning member 34 comprises:
- a hollow central core 41 which places in hydraulic communication the at least one discharge channel A with the turbine member 33 and
- at least one nozzle element 42 which extends from the central core 41 so as to skim over the mechanical filter 31 and is crossed by the discharge channel A.

For example, each nozzle element 42 may extend from the central core 41 tangentially with respect to a direction which is circumferential in relation to the axis of rotation X of the turbine member.

Even more preferably, the opening B of each discharge channel A is defined by a slit provided at one end of the nozzle element 42, where the end skims over the mechanical filter 31. In other words, each discharge channel A is open at a slit which is open along one end of the at least one nozzle element 42, in particular where the end of the at least one nozzle element 42 skims over the surface of the mechanical filter 31.

In this way, a rotation of the turbine member 33 results in rotation of the cleaning member 34 or the mechanical filter 31, and therefore of the central core 41 and the at least one nozzle element 42, in such a way that the at least one nozzle element 42 may collect with a suction effect any waste matter deposited on the surface of the mechanical filter 31, for example on the surface facing the first section 121a, during maintenance of the filtering device 100 which involves opening of the discharge connector 12. Consequently, the waste matter is then discharged by means of the at least one discharge channel A towards the discharge section 121c and out of the filtering device 100.

According to the alternative embodiment, shown in Figures 5, 6, 7 and 8, the filtering device 100 may comprise:
- an upper connector 132a, able to connect the mechanical filter 31 to the hydraulically sealed connection body 10;
- a lower cap 132b adapted to prevent, in cooperation with the upper connector 132a, a direct hydraulic connection between the first section 121a and the second section 121b, i.e. one which does not occur through the mechanical filter 31.

In other words, when the filtering device 100 is assembled, the lower cap 132b prevents a direct hydraulic connection between the first section 121a and the second section 121b, i.e. a connection which does not occur through the mechanical filter 31.

The cleaning group 32 may comprise a separating wall 35 able to prevent a direct hydraulic connection between the second section 121b and the discharge section 121c, i.e. a connection which does not occur through the discharge channel A.

The separating wall 35 may define a flange 51 from which a plurality of nozzle elements 52 extend, for example in a radial direction with respect to the axis of rotation X of the turbine member 33, each crossed by a discharge channel A which crosses the flange 51. Moreover, preferably one of the flange 51 and the mechanical filter 31 is fixed to the turbine member 33 and the other one of the flange 51 and the mechanical filter 31 is rotatably coupled to the container body 10 and/or to the connection body 20.

In this way, a rotation of the turbine member 33 results in a rotation of the cleaning member 34, and therefore of the separating wall 35, the flange 51 and the plurality of nozzle elements 52, or results in a rotation of the mechanical filter 31, as in the version shown by way of example in Figures 5-8, in such a way that the nozzle elements 52 may collect with a suction effect (schematically indicated in Figure 6 by means of broken line arrows) and at the same time with counter-current washing of the mechanical filter 31 (schematically indicated in Figure 6 by means of dot-dash line arrows) any deposited waste matter which blocks up the surface of the mechanical filter 31 facing the second section 121b namely on the outer wall E of the mechanical filter 31. Consequently, the waste matter is then discharged by means of the at least one discharge channel A towards the discharge section 121c and out of the filtering device 100.

It is therefore clear how the filtering device according to the present invention is able to solve the aforementioned problems of the prior art and is able to achieve further advantages.

In particular, by means of opening of the discharge connector 12, the turbine member 33 may be rotationally moved by a liquid flow flowing out from the device through the discharge section 121c towards the outside of the filtering device 100. This results in rotation of the cleaning member 34 or the mechanical filter 31, which allows the collection with a suction action of any waste matter deposited on the surface of the mechanical filter 31 of the filter cartridge 30 and in particular on the inner wall J in the example of the first variant of Figures 2-4 or from the outer wall E in the example of the first variant of Figures 5-8.

Different embodiments of the present invention have furthermore been described, all falling within the scope of protection and equally effective in solving the technical problems mentioned above.

The invention thus devised may be subject to numerous modifications and variations, all of which fall within the scope of protection of the attached claims.

Moreover, all the details may be replaced by other technically equivalent elements.

In practice the materials used, as well as the associated forms and dimensions, may be varied depending on the particular requirements and the state of the art.

Where the constructional characteristics and the techniques mentioned in the following claims are followed by reference numbers or symbols, these reference numbers or symbols have been assigned with the sole purpose of facilitating understanding of the said claims and consequently they do not limit in any way the interpretation of each element which is identified, purely by way of example, by said reference numbers or symbols.

## Claims

1. Filtering device (100) which comprises:
- a connection body (10) equipped with connection connectors (11a, 11b) and a discharge connector (12), each of which defines an internal passage (111a, 111b);
- a container body (20) which can be coupled to said connection body (10) so as to define, following their coupling together, a filtering compartment (120) which is in fluid communication with each of said internal passages (111a, 111b);
- a filter cartridge (30) configured to engage with said connection body (10) and/or with said container body (20) so as to be housed in said filtering compartment (120);
wherein said filter cartridge (30) comprises:
- a mechanical filter (31) which delimits a first section (121a) of said filtering compartment (120) from a second section (121b) of said filtering compartment (120) and which can be crossed by a liquid so as to filter it;
- a turbine member (33) which delimits a discharge section (121c) of said filtering compartment from said first section (121a) or from said second section (121b);
- a cleaning member (34) able to carry out a hydraulic cleaning action on said mechanical filter;
wherein said turbine member (33) is mechanically connected to said mechanical filter and/or to said cleaning member (34) so as to impart to them a relative rotational moment following a passage of a liquid through said turbine member (33);
wherein said cleaning member (34) is, selectively,
- housed in said first section (121a) if said turbine member (33) delimits said discharge section (121c) from said first section (121a) or
- said cleaning member (34) is housed in said second section (121b) if said turbine member (33) delimits said discharge section (121c) from said second section (121b);
wherein said cleaning member (34) defines a discharge channel (A) which places in hydraulic communication with said discharge section (121c) selectively: said first section (121a) or said second section (121b);
wherein one of said cleaning member (34) and said mechanical filter (31) is connected to said turbine member (33) so as to be moved by the latter, and the other one of said cleaning member (34) and said mechanical filter (31) is rotatably coupled to said container body (10) and/or to said connection body (20) in such a way that, following passage of fluid through said turbine member (33), a relative rotation of said cleaning member (34) with respect to said mechanical filter (31) is produced;
wherein said discharge connector (12) can be opened to allow a fluid to flow out of said filtering compartment (120), said filtering device (100) being configured so that a fluid flow out of said discharge connector (12) causes the passage of fluid through said turbine member (33) and a consequent rotation of said cleaning member (34) around said mechanical filter (31), or vice versa, and the crossing of the latter by a counter-current fluid flow directed towards said discharge channel (A) so as to remove from said mechanical filter (31) residues filtered by the latter and discharge them from said filtering device (100) through said discharge connector (12).

2. Filtering device (100) according to claim 1, wherein said cleaning member (34) extends so as to skim over a surface of said mechanical filter (31) and has an opening (B), facing said mechanical filter (31), which communicates hydraulically with said discharge channel (A) so as to exert a suction action on residues filtered by said mechanical filter (31) and lying on said surface following a discharge of liquid through said opening of said discharge connector (12).

3. Filtering device (100) according to one of the preceding claims, whereinin said mechanical filter (31) is cylindrical and has a central axis which coincides with a rotation axis (X) of said turbine member (33); said at least one cleaning member (34) having said opening (B) extending parallel to a central axis so as to skim over said mechanical filter (31).

4. Filtering device (100) according to one of the preceding claims, wherein said cleaning member (34) comprises a plurality of nozzle elements (42) each crossed by a channel (A) and arranged at a regular angular interval around an axis of rotation (X) of said turbine member (33).

5. Filtering device according to one of the preceding claims, which comprises
- an upper connector (131a), able to connect said mechanical filter (31) to said hydraulically sealed connection body (10);
- a lower connector (131b) able to connect said mechanical filter (31) to said hydraulically sealed container body (20);
wherein said turbine member (33) is rotatably connected by said lower connector (131b) and said at least one cleaning member (34) is rotatably connected by said upper connector (131a).

6. Filtering device (100) according to claim 5, wherein said cleaning member (34) comprises:
- a hollow central core (41) which places said at least one discharge channel (A) in hydraulic communication with said turbine member (33) and
- at least one nozzle element (42) which extends from said central core (41) so as to skim over said mechanical filter (31) and is crossed by said discharge channel (A).

7. Filtering device (100) according to claims 2 and 6, wherein the opening (B) of each said discharge channel (A) is defined by a slit provided at one end of said nozzle element (42), wherein said end skims over said mechanical filter (31).

8. Filter device (100) according to one of claims 1 to 4, which comprises
- an upper connector (132a), able to connect said mechanical filter (31) to said hydraulically sealed connection body (10);
- a lower cap (132b) adapted to prevent, in cooperation with said upper connector (132a), a direct hydraulic connection between said first section (121a) and said second section (121b), i.e. a connection which does not occur through said mechanical filter (31).

9. Filtering device according to claim 8, wherein said cleaning group (32) comprises a separating wall (35) able to prevent a direct hydraulic connection between said second section (121b) and said direct discharge section (121c), i.e. a connection which does not occur through said discharge channel (A).

10. Filtering device according to claim 9, wherein said separating wall (35) defines a flange (51) from which a plurality of nozzle elements (52) extend, each crossed by one said discharge channel (A) which crosses said flange (51); wherein one of said flange (51) and said mechanical filter (31) is fixed to said turbine member (33) and the other one of said flange (51) and said mechanical filter (31) is rotatably coupled to said container body (10) and/or to said connection body (20).
